# EUROPÄISCHE PATENTSCHRIFT

(11) **EP 0 745 317 B1**
(45) Veröffentlichungstag und Bekanntmachung des Hinweises auf die Patenterteilung: **26.01.2000**
(21) Anmeldenummer: 96107456.4
(22) Anmeldetag: 10.05.1996
(51) Int. Cl.: A01F 12/28

(54) **Selbstfahrender Mähdrescher mit verstellbarem Dreschkorb**
Self-propelled combine with adjustable concave
Moissonneuse-batteuse automatique à contre-batteur réglable

(30) Priorität: 03.06.1995 DE 19520463
(43) Veröffentlichungstag der Anmeldung: 04.12.1996
(73) Patentinhaber: CLAAS KGaA, 33428 Harsewinkel (DE)
(72) Erfinder: Kersting, Hermann, 59302 Oelde (DE)

(56) Entgegenhaltungen:
- EP-A- 0 628 241
- BE-A- 678 150
- DE-A- 4 023 720
- DE-A- 4 218 610
- DE-C- 685 700

## Beschreibung

Die Erfindung betrifft einen selbstfahrenden Mähdrescher mit mindestens zwei zur Fahrtrichtung unmittelbar hintereinander angeordneten, aus je einer Trommel und einem Korb bestehenden, im Tangentialfluß arbeitenden Dreschwerken, wobei beide Körbe mit ihren einander zugewandten Enden gelenkig miteinander verbunden sind und wobei beide Trommeln gleichsinnig antreibbar und der Spalt zwischen dem Korb und der Trommel des ersten Dreschwerkes und der Spalt zwischen dem Korb und der Trommel des zweiten Dreschwerkes gemeinsam einstellbar sind, und der Korb des ersten Dreschwerkes im wesentlichen parallel zu sich selbst verstellbar und der Korb des zweiten Dreschwerkes an seinem dem Korb des ersten Dreschwerkes abgewandten Ende drehbar gelagert ist, und wobei die Umfangsgeschwindigkeit der in Arbeitsrichtung betracht ersten Trommel kleiner sein kann als die der daran anschließenden zweiten Trommel und die erste Trommel als vollzylindrischer Grundkörper ausgebildet sein kann, der mit auf seiner äußeren Mantelfläche verteilt angeordneten Mitnehmern besetzt ist.

Ein solcher Mähdrescher ist beispielsweise durch die DE-OS 40 23 720 bekannt. Bei diesem bekannten Mähdrescher sind die voneinander entfernt liegenden Enden der beiden Dreschkörbe in jeweils einer Lagereinrichtung schwenkbar gelagert und die einander zugewandten Enden von einer gemeinsamen Achse gehalten. Diese gemeinsame Achse ist beidendig in Augen von Zugstangen gelagert, so daß bei Betätigung der Zugstangen beide Körbe gemeinsam verstellt werden können. Bei der Verstellung der Dreschkörbe hat sich als nachteilig herausgestellt, daß beim Anheben der die beiden Dreschkörbe verbindenden Achse der Einlaufspalt des ersten Dreschwerkes vergrößert und der Einlaufspalt des zweiten Dreschwerkes verkleinert wird. Um trotzdem bei einem Mähdrescher der bekannten Art eine gleichsinnige Veränderung beider Einlaufspalte zu erreichen, sind die einander abgewandten Enden der beiden Dreschkörbe in der Höhe verlagerbar, um so die Eingangsspalte der beiden Dreschwerke nachjustieren zu können. Eine solche Einstellung erfordert jedoch zusätzlichen Aufwand.

Der vorliegenden Erfindung liegt daher die Aufgabe zugrunde, einen Mähdrescher der eingangs genannten Art so auszubilden, daß sich bei gemeinsamer Verstellung der beiden Dreschkörbe die Einlaufspalte beider Dreschwerke gleichsinnig verändern.

Dies wird dadurch erreicht, daß der Korb des ersten Dreschwerkes im Bereich seiner Seitenenden endseitige Laschen aufweist, über die der Korb mit Winkelhebeln gelenkig verbunden ist, die gemeinsam um je eine ortsfeste Achse verschwenkbar sind, nach Art eine Parallelogramms, der Winkelhebel über eine KolbenZylindereinheit, die an dem Schenkel eines Winkelhebels angreift verschwenkt wird wobei die Winkelhebel an ihrem den Laschen abgewandten Schenkeln über eine Koppel miteinander verbunden sind, die einander zugewandten Enden der beiden Körbe über Laschen gelenkig miteinander verbunden sind und der Korb des ersten Dreschwerkes in seinem dem zweiten Dreschwerk zugewandten Endbereich abgewinkelt und dort dem Hüllkreis der zweiten Dreschtrommel zugeordnet bzw. angepaßt ist. Alternativ zu dieser Ausführungsform kann der Korb des ersten Dreschwerkes in seinem dem Korb des zweiten Dreschwerkes angrenzenden, abgewinkeltem Bereich mit einem Korbbelag als Reibbzw. Dreschelement ausgerüstet sein, der einendig schwenkbar im Rahmen des Korbes gelagert ist.

Dieser klappenartig angeordnete Korbbelag stützt sich nach nach unten hin über Laschen an den Winkelhebeln des ersten Dreschkorbes ab, so daß bei einer Verschiebung des ersten Korbes der Korbbelag mit verstellt wird. Die Anlenkung der Laschen an den Winkelhebeln ist dabei so gewählt, daß bei einer Verschiebung des ersten Korbes die Klappe sich voreilend so einstellt, daß der Einlaufspalt des zweiten Dreschwerkes mit dem des ersten Dreschwerkes übereinstimmt.

Beide Ausführungsformen dienen dazu, die Veränderung der Einlaufspalte beider Dreschwerke zu synchronisieren.

Im folgenden soll die Erfindung anhand eines Ausführungsbeispiels und mehrerer dieses schematisch darstellender Figuren näher erläutert werden. Dabei zeigt:
- Figur 1: den dreschwirksamen Teil eines Mähdreschers in der Seitenansicht,
- Figur 2: den in Figur 1 dargestellten Bereich zum Teil und in vergrößerter Darstellung,
- Figur 3: eine gegenüber den Figuren 1 und 2 abgewandelte Ausführungsform in abgesenkter Korbstellung und
- Figur 4: die in Figur 3 dargestellte Ausführungsform mit angestellten Dreschkörben.

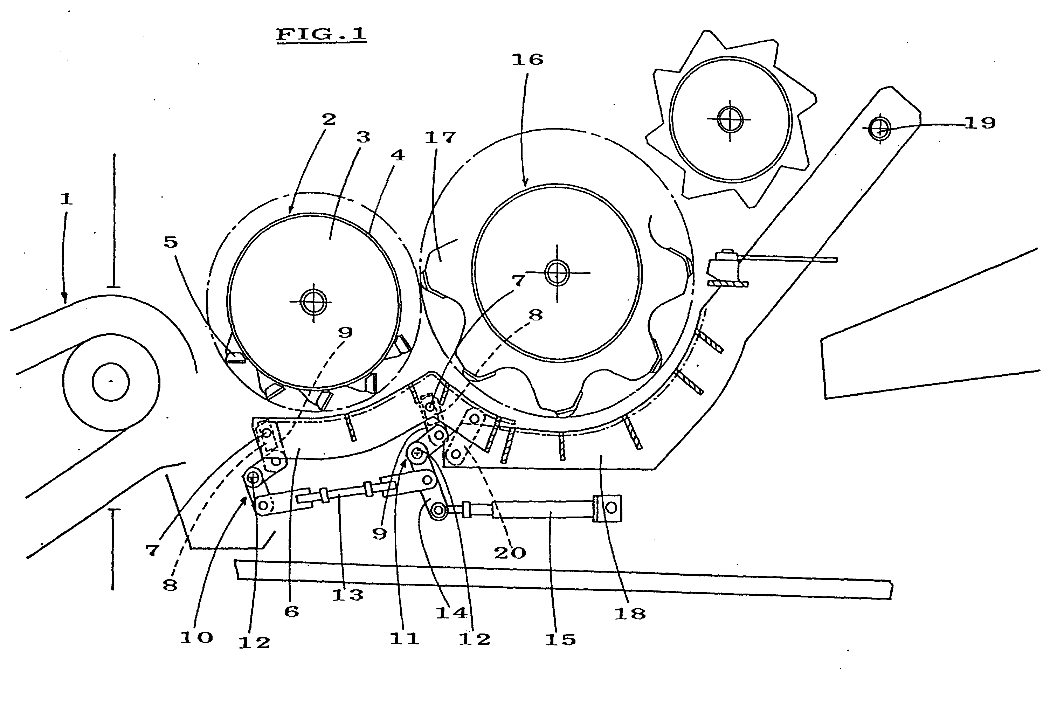

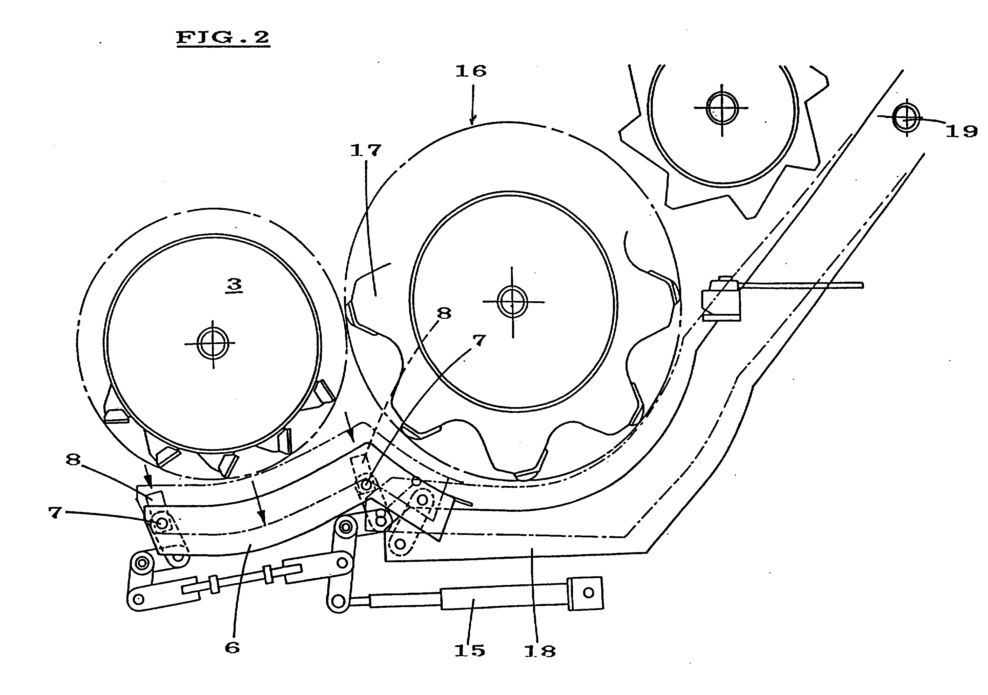

In der Figur 1 ist mit 1 ein Schrägförderer bezeichnet, an den sich ein erstes Dreschwerk 2 anschließt. Dieses Dreschwerk 2 besteht im wesentlichen aus einer Dreschtrommel 3 mit einem geschlossenen Zylindermantel 4, auf den verteilt Mitnehmer 5 aufgesetzt sind. Der Dreschtrommel 3 des ersten Dreschwerkes 2 ist ein Korb 6 zugeordnet. Der Korb 6 ist mit Zapfen 7 versehen, die in parallel zueinander verlaufenden Schlitzen 8 des nicht dargestellten Mähdreschergehäuses geführt sind. Auf die Zapfen 7 sind weiterhin Laschen 9 aufgesetzt, welche gelenkig mit Winkelhebeln 10 und 11 verbunden sind. Diese Winkelhebel 10 und 11 sind um feste Achsen 12 schwenkbar, wobei die den Laschen 9 abgewandten Schenkel der Winkelhebel 10 und 11 miteinander durch eine Koppel 13 verbunden sind. Ein Schenkel des Winkelhebels 11 weist eine Verlängerung 14 auf, an die die Kolbenstange einer Kolbenzylindereinbeit 15 angreift. Durch Betätigung der Kolbenzylindereinheit 15 wird der Korb 6 parallel zu sich selbst verstellt, wie dies aus Figur 2 ersichtlich und durch Pfeile gekennzeichnet ist.

Dem ersten Dreschwerk 2 ist ein weiteres Dreschwerk 16 nachgeordnet. Es besteht in an sich bekannter Weise aus einer Dreschtrommel 17 und einem dieser zugeordneten Korb 18. Wie aus den Figuren 1 und 2 zu erkennen, ist der Korb 6 des ersten Dreschwerkes 2 im Bereich seines dem zweiten Dreschwerk 16 zugewandten Endes abgewinkelt, wobei der abgewinkelte Bereich dem Hüllkreis der Dreschtrommel 17 des zweiten Dreschwerkes 16 angepaßt ist. Der Korb 18 des zweiten Dreschwerkes 16 ist um eine dem Dreschkorb 6 des ersten Dreschwerkes 2 entfernt liegende Achse 19 verschwenkbar und über eine Lasche 20 mit dem abgewinkelten Ende des Korbes 6 gelenkig verbunden. Hierdurch wird erreicht, daß bei Vergrößerung des Einlaufspaltes des ersten Dreschwerkes 2 gleichzeitig auch der Einlaufspalt des zweiten Dreschwerkes 16 vergrößert wird. Dies wird deutlich bei Betrachtung der Figur 2, in welcher mit voll ausgezogenen Linien die abgesenkte Stellung der beiden Körbe und mit strichpunktierten Linien die angestellte Stellung der beiden Körbe 6 und 18 gezeigt ist.

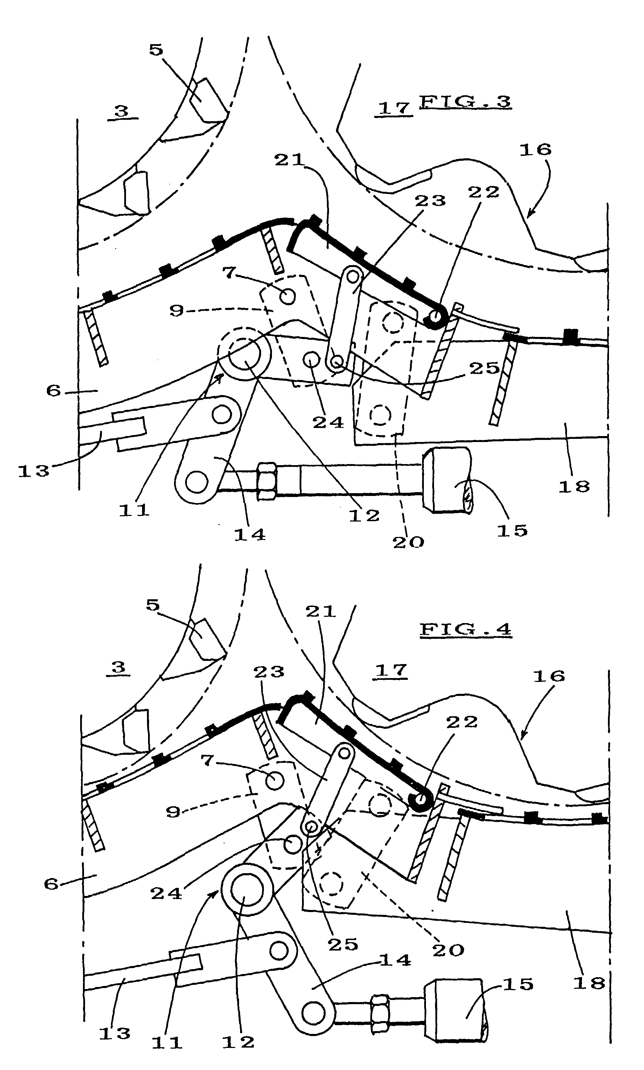

Die Figuren 3 und 4 zeigen ein alternatives Ausführungsbeispiel im Bereich des abgewinkelten Korbes des ersten Dreschwerkes. Bei diesem alternativen Beispiel ist der abscheidewirksame Bereich des abgewinkelten Teiles des Korbes 6 als Klappe 21 ausgebildet. Diese Klappe 21 ist um eine Achse 22 drehbar gelagert und gelenkig über eine Lasche 23 mit einem Schenkel des Winkelhebels 11 verbunden. Aus den Figuren 3 und 4 geht dabei hervor, daß der Anlenkpunkt 24 der Lasche 9 der Schwenkachse 12 des Winkelhebels 11 näher liegt als der Anlenkpunkt 25 der Lasche 23. Auf diese Weise verlagert sich bei Betätigung der Kolbenzylindereinheit 15 die Klappe 21 gegenüber dem übrigen Rahmenteil des Korbes 6. Dies wird bei Betrachtung der Figur 4 deutlich, wo die Klappe 21 in einer gegenüber der Lage nach Figur 3 angehobenen Stellung dargestellt ist.

## Patentansprüche

1. Selbstfahrender Mähdrescher mit zumindest zwei quer zur Fahrtrichtung unmittelbar hintereinander angeordneten, aus je einer Trommel (3,17) und einem Korb (6,18) bestehenden, im Tangentialfluß arbeitenden Dreschwerken (2,16), wobei beide Körb (6,18) mit ihren einander zugewandten Enden gelenkig miteinander verbunden sind und wobei beide Trommeln (3,17) gleichsinnig antreibbar und der Spalt zwischen dem Korb (6) und der Trommel (3) des ersten Dreschwerkes (2) und der Spalt zwischen dem Korb (18) und der Trommel (17) des zweiten Dreschwerkes (16) gemeinsam einstellbar sind und der Korb (6) des ersten Dreschwerks (2) im wesentlichen parallel zu sich selbst verstellbar und der Korb (18) des zweiten Dreschwerks (16) an seinem dem Korb (6) des ersten Dreschwerkes (2) abgewandten Ende drehbar gelagert ist,
**dadurch gekennzeichnet,**
daß der Korb (6) des ersten Dreschwerks (2) endseitig Laschen (9) aufweist, über die der Korb (6) mit Winkelhebeln (10 und 11) gelenkig verbunden ist, die um je eine ortsfeste Achse (12) verschwenkbar sind nach art eines Paralellogramms, die Winkelhebel (10 und 11) an ihren den Laschen (9) abgewandten Schenkeln über eine Koppel (13) miteinander verbunden und gemeinsam über eine Kolbenzylindereinheit verschwenkbar, die einander zugewandten Enden der beiden Körbe (6 und 18) über Laschen (20) gelenkig miteinander verbunden sind und das dem zweiten Dreschwerk (16) zugewandte Ende des Korbes (6) des ersten Dreschwerks (2) abgewinkelt ist, wobei der abgewinkelte Bereich dem Hüllkreis der zweiten Dreschtrommel (17) zugeordnet und angepaßt ist.

2. Selbstfahrender Mähdrescher nach den Ansprüchen 1 bis 6,
**dadurch gekennzeichnet,**
daß der abgewinkelte Bereich des Korbes (6) des ersten Dreschwerkes mit einem Reibbelag (21) ausgestattet ist, der um eine Achse (22) schwenkbar mit dem Korb (6) verbunden ist.

3. Selbstfahrender Mähdrescher nach den Ansprüchen 1 bis 7,
**dadurch gekennzeichnet,**
daß der Reibbelag in Form einer Klappe mit dem Korb (6) verbunden ist.

4. Selbstfahrender Mähdrescher nach den Ansprüchen 1 bis 8,
**dadurch gekennzeichnet,**
daß der klappenförmige Reibbelag mittels einer oder mehreren Laschen (23) nach unten hin abgestützt ist und die Laschen (23) mit ihren dem Reibbelag entfernten Ende antriebstechnisch mit der Einrichtung (11, 12, 14,15) zum Verschieben des Korbes (6) verbunden sind.

## Claims

1. A self-propelled combine harvester having at least two threshing mechanisms (2, 16) which are arranged directly one behind the other transversely with respect to the direction of travel and which each comprise a drum (3, 17) and a concave (6. 18) and which operate in the tangential flow mode, wherein both concaves (6, 18) are pivotably connected together with their mutually facing ends and wherein both drums (3, 17) are drivable in the same direction and the gap between the concave (6) and the drum (13) of the first threshing mechanism (2) and the gap between the concave (18) and the drum (17) of the second threshing mechanism (16) are jointly adjustable and the concave (6) of the first threshing mechanism (2) is displaceable substantially parallel to itself and the concave (18) of the second threshing mechanism (16) is rotatably supported at its end remote from the concave (6) of the first threshing mechanism (2), characterised in that the concave (6) of the first threshing mechanism (2) has at the ends plates (9) by way of which the concave (6) is pivotably connected to elbow levers (10 and 11) which are each pivotable about a respective stationary axis (12) in the manner of a parallelogram, the angle levers (10 and 11) are connected together by way of a connecting rod (13) at their limbs remote from the plates (9) and are jointly pivotable by way of a piston-cylinder unit, the mutually facing ends of the two concaves (6 and 18) are pivotably connected together by way of plates (20). and the end, which is towards the second threshing mechanism (16), of the concave (6) of the first threshing mechanism (2) is angled, wherein the angled region is associated with and adapted to the envelope circle of the second threshing drum (17).

2. A self-propelled combine harvester according to claim 1 characterised in that the angled region of the concave (6) of the first threshing mechanism is provided with a friction lining (21) which is connected to the concave (6) pivotably about an axis (22).

3. A self-propelled combine harvester according to claim 2 characterised in that the friction lining is connected to the concave (6) in the form of a flap.

4. A self-propelled combine harvester according to claim 3 characterised in that the flap-form friction lining is supported in a downward direction by means of one or more plates (23) and the plates (23) at their ends remote from the friction lining are drivingly connected to the device (11, 12, 14, 15) for displacement of the concave (6).

## Revendications

1. Moissonneuse-batteuse automotrice comportant au moins deux mécanismes de battage (2, 16) qui sont disposés l'un derrière l'autre transversalement à la direction de déplacement, comprennent chacun un tambour (3, 17) et un contre-batteur (6, 18) et travaillent en écoulement tangentiel, les deux contre-batteurs (6, 18) étant liés l'un à l'autre de manière articulée par leurs extrémités en vis-à-vis, les deux tambours de battage (3, 17) étant entraînés en rotation dans le même sens et l'espace entre le contre-batteur (6) et le tambour de battage (3) du premier mécanisme de battage (2) et l'espace entre le contre-batteur (18) et le tambour de battage (17) du second mécanisme de battage (2) pouvant être réglés simultanément, le contre-batteur (6) du premier mécanisme de battage (2) étant réglable essentiellement parallèlement à lui-même et le contre-batteur (18) du second mécanisme de battage (16) étant monté tournant à son extrémité éloignée du contre-batteur (6) du premier mécanisme de battage (2), caractérisée par le fait que le contre-batteur (6) du premier mécanisme de battage (2) présente, à ses extrémités, des pattes (9) par l'intermédiaire desquelles le contre-batteur est lié de manière articulée à des leviers coudés (10 et 11) qui peuvent pivoter chacun autour d'un axe (12) stationnaire à la manière d'un parallélogramme, que les leviers coudés (10 et 11) sont liés entre eux par l'intermédiaire d'un élément de couplage (13), au niveau de leur bras éloigné des pattes (9) et peuvent pivoter ensemble sous l'action d'un ensemble piston-cylindre, que les extrémités en vis-à-vis des deux contre-batteurs (6, 18) sont liées entre elles de manière articulée par des pattes (20) et que l'extrémité du contre-batteur (6) du premier mécanisme de battage (2) tournée vers le second mécanisme de battage (16) est coudée, le partie coudée étant associée et adaptée au cercle enveloppe du second tambour de battage (17).

2. Moissonneuse-batteuse automotrice selon la revendication 1, caractérisée par le fait que la partie coudée du contre-batteur (6) du premier mécanisme de battage est pourvue d'une garniture de friction (21) qui est liée au contre-batteur (6) et peut pivoter avec celui-ci autour d'un axe (22).

3. Moissonneuse-batteuse automotrice selon les revendications 1 à 2, caractérisée par le fait que la garniture de friction en forme de volet est liée au contre-batteur (6).

4. Moissonneuse-batteuse automotrice selon une des revendications 1 à 3, caractérisée par le fait que la garniture de friction en forme de volet est supportée vers le bas par une ou plusieurs pattes (23) et que les pattes (23) par leur extrémité éloignée de la garniture de friction sont liées sur le plan de l'entraînement au dispositif (11, 12, 14, 15) de déplacement du contre-batteur (6).
